# EUROPÄISCHE PATENTANMELDUNG

(11) **EP 0 926 421 A1**
(43) Veröffentlichungstag der Anmeldung: **30.06.1999**
(21) Anmeldenummer: 97811011.2
(22) Anmeldetag: 22.12.1997
(51) Int. Cl.: F16L 37/12

(54) **Vorrichtung zum Verbinden mehrteiliger Zylinder für Hydraulikaufzüge**

(71) Anmelder: INVENTIO AG, CH-6052 Hergiswil (CH)
(72) Erfinder: Santel, Vincenzo, 30030 Pianiga (VE) (IT); Santel, Marco, 30030 Pianiga (VE) (IT)

(57) **Zusammenfassung**

Bei dieser Vorrichtung zum Verbinden mehrteiliger Zylinder für Hydraulikaufzüge werden an einem oberen Zylinderteil (1) und einem unteren Zylinderteil (2), Flansche (3, 4) angeschweisst. Aufgrund dieser Flansche (3, 4) können nun die beiden Zylinderteile (1, 2) sehr einfach ineinandergesteckt werden. Anschliessend werden über die zusammengesteckten Flansche (3, 4) zwei halbkreisförmige Mantelschalen (10) in Position gebracht. Dann wird über die Mantelschalen (10) ein Sicherungsring (13) geschoben, der die Mantelschalen (10) an den Flanschen (3, 4) festhält. Mit dieser Vorrichtung wird das Verbinden mehrteiliger Zylinder für Hydraulikaufzüge nicht nur vereinfacht sondern auch die Montagezeit wird wesentlich verkürzt. Eine Zerstörung der Verbindung während der Montage kann ausgeschlossen werden, wie dies bei Gewindeverbindungen jedoch häufig der Fall ist, wenn die beiden Zylinderteile (1, 2) in Längsachsrichtung nicht exakt aufeinander ausgerichtet sind, was zu einer Beschädigung der Gewinde führt.

## Beschreibung

Die Erfindung betrifft eine Vorrichtung zum Verbinden mehrteiliger Zylinder für Hydraulikaufzüge.

Lange Hydraulikzylinder werden mehrteilig hergestellt und transportiert und dann vor Ort zusammengesetzt. Beispielsweise ist aus der US 4 219 226 eine Zylinderrohr-Verbindung für Hydraulikaufzüge bekanntgeworden, bei der die Zylinderstücke an ihren Enden Kupplungen aufweisen, die mit Gewinden versehen sind. Beim Zusammenbau werden die Zylinderstücke über Kupplungen miteinander verschraubt.

Die Verschraubung der schweren und unhandlichen Zylinderstücke ist einerseits sehr zeitaufwendig, andererseits werden, wenn die beiden Zylinderstücke nicht exakt aufeinander ausgerichtet sind, beim Versuch sie zu verschrauben, die Gewinde zerstört. Dies verursacht neben unnötigen Kosten bei der Installation der Aufzugsanlage auch lästige Verzögerungen durch die Auswechslung der Gewinde-Kupplungen.

Der Erfindung liegt die Aufgabe zugrunde, eine Vorrichtung zum Verbinden mehrteiliger Zylinder für Hydraulikaufzüge der eingangs genannten Art vorzuschlagen, welche die vorgenannten Nachteile nicht aufweist.

Diese Aufgabe wird durch die im Patentanspruch 1 gekennzeichnete Erfindung gelöst.

Der durch die Erfindung erreichte Vorteil ist im wesentlichen darin zu sehen, dass durch die Verwendung einer Steckverbindung zum Verbinden der Zylinder eine erhebliche Reduzierung der Installationszeit erreicht wird.

In der Zeichnung sind zwei Ausführungsbeispiele der Erfindung dargestellt und im folgenden näher erläutert. Es zeigen:
- Fig.1: einen Längsschnitt durch eine erfindungsgemässe Vorrichtung zum Verbinden der Zylinder für Hydraulikaufzüge nach einer ersten Ausführungsform, und
- Fig.2: einen Ausschnitt eines Längsschnittes durch eine erfindungsgemässe Vorrichtung nach einer zweiten Ausführungsform.

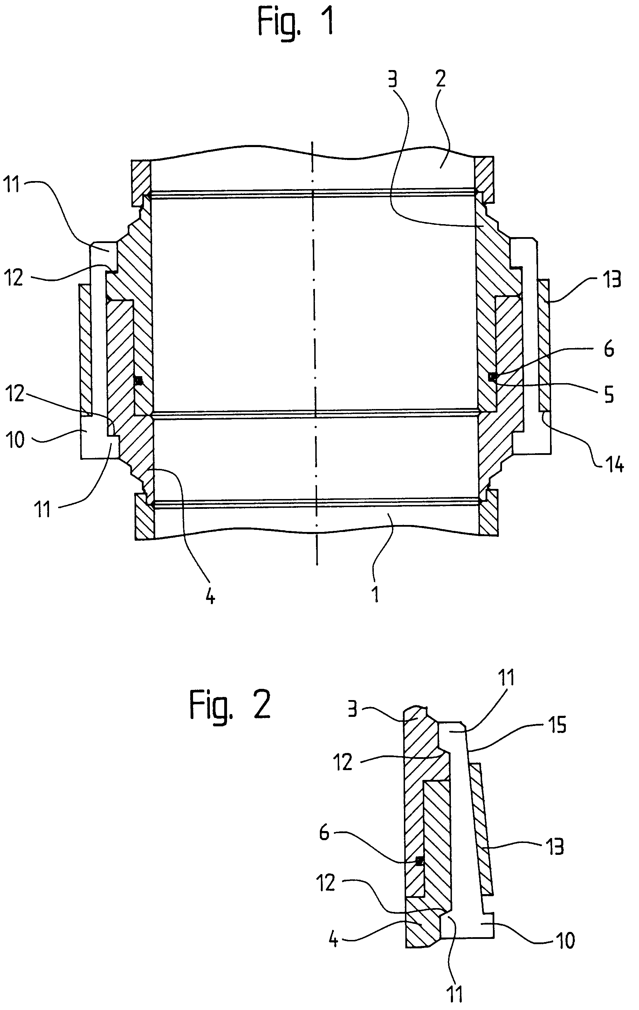

In Figur 1 ist mit 1 ein erster, hier unterer Zylinderteil und mit 2 ein zweiter, oberer Zylinderteil bezeichnet. An den Enden beider Zylinderteilen 1, 2 sind Kupplungsstücke in Form von Flanschen 3, 4, vorzugsweise aus Stahl, angeschweisst oder angeschraubt. Aufgrund dieser Flansche 3, 4 können nun die beiden Zylinderteile 1, 2 sehr einfach ineinandergesteckt werden. Der Aussendurchmesser des Flansches 3 des oberen Zylinderteils 2 ist geringfügig kleiner als der Innendurchmesser des Flansches 4 des unteren Zylinderteils 1 und zwar in einem solchen Masse, dass zwischen den beiden Flanschen 3, 4 vorzugsweise ein Laufsitz besteht. An der Aussenseite des Flansches 3 ist eine Aussparung 5 vorgesehen, die Platz für einen Dichtungsring 6, vorzugsweise aus Gummi, bietet.

Anschliessend werden über die zusammengesteckten Flansche 3, 4 zwei halbringförmige Mantelschalen 10, insbesondere aus Stahl, in Position gebracht. Der Innendurchmesser einer solchen Mantelschale 10 wird so gewählt, dass zu den Flanschen 3, 4 ein Laufsitz besteht. Diese Mantelschalen 10 weisen an beiden Enden jeweils einen Bund 11 auf, die im Zusammenspiel mit Vorsprüngen 12 an den Flanschen 3, 4 ein Auseinanderziehen in Richtung der Längsachse der beiden Zylinderteile 1, 2 während des Betriebs, wenn unter Druck stehendes Hydrauliköl durch die Zylinderteile 1, 2 gepresst wird, verhindert. Um jedoch die Mantelschalen 10 ohne Presswerkzeuge auf die Flansche 3, 4 aufsetzen zu können, wird ein kleiner Luftspalt vorgesehen, wobei die Distanz zwischen den beiden Bünden 11 geringfügig grösser, vorzugsweise im Bereich von wenigen Zehntelsmillimetern, gewählt wird als die Distanz zwischen den beiden Vorsprüngen 12 der ineinandergesteckten Flansche 3, 4.

Schliesslich wird über die Mantelschalen 10 ein Sicherungsring 13, beispielsweise ein Stahlring, geschoben, der die Mantelschalen 10 an den Flanschen 3, 4 festhält. Der Sicherungsring 13 wird, die Passung entspricht in diesem Fall vorzugsweise einem Laufsitz, bis zu einem Anschlag 14 an den Mantelschalen 10 geschoben. In dieser Anordnung bietet die Vorrichtung zum Verbinden mehrteiliger Zylinder eine dichte Verbindung, die ein Austreten von Hydrauliköl zuverlässig verhindert. Sollte ein bereits mit der Vorrichtung verbundener Zylinder transportiert werden, kann der Sicherungsring 13 gegen ein Verschieben oder Herausfallen während des Transports zusätzlich, beispielsweise mittels einer Schraube, gesichert werden. Während des Betriebs ist der Sicherungsring 13 durch den Anschlag 14 gegen ein Verschieben nach unten oder ein Herausfallen gesichert.

Mit dieser Vorrichtung wird das Verbinden mehrteiliger Zylinder für Hydraulikaufzüge nicht nur vereinfacht sondern auch die Montagezeit wird wesentlich verkürzt. Zudem kann eine Zerstörung der Verbindung während der Montage ausgeschlossen werden. Im Gegensatz dazu ist dies bei Gewindeverbindungen häufig der Fall, wenn die beiden Zylinderteile 1, 2 in Längsachsrichtung nicht exakt aufeinander ausgerichtet sind, was zu einer Beschädigung der Gewinde führt.

Figur 2 zeigt eine zweite Ausführungsform der Vorrichtung zum Verbinden mehrteiliger Zylinder. Bei diesem Ausführungsbeispiel werden die Vorsprünge 12 der beiden Flansche 3, 4 konisch ausgeführt. Ebenso sind die Innenseiten der Bünde 11 der Mantelschalen 10 konisch. Auf diese Art kann auf einen Luftspalt zwischen den Bünden 11 und den Vorsprüngen 12 der Flansche 3, 4, wie es beim ersten Ausführungsbeispiel beschrieben ist, verzichtet werden, da durch die Anschrägungen die Mantelschalen 10 auch ohne Presswerkzeuge passgenau aufgesetzt werden können. Weiter können auch die Aussenseiten 15 der Mantelschalen 10 konisch ausgeführt und ein konischer Sicherungsring 13 verwendet werden, was zu einer zuverlässigen Sicherung der Mantelschalen 10 führt.

## Patentansprüche

1. Vorrichtung zum Verbinden mehrteiliger Zylinder für Hydraulikaufzüge, wobei die Verbindung zwischen einem unteren Zylinderteil (1) und einem oberen Zylinderteil (2) aufgrund von Kupplungsstücken hergestellt wird,
dadurch gekennzeichnet,
dass die Kupplungsstücke als Flansche (3, 4) ausgebildet sind, die ineinandergesteckt werden, wobei der Aussendurchmesser des Flansches (3) des einen Zylinderteils (2) geringfügig kleiner ist als der Innendurchmesser des Flansches (4) des anderen Zylinderteils (1).

2. Vorrichtung nach Anspruch 1,
dadurch gekennzeichnet,
dass die ineinandergesteckten Flansche (3, 4) von Mantelschalen (10) umgeben sind.

3. Vorrichtung nach Anspruch 1 oder 2,
dadurch gekennzeichnet,
dass die Mantelschalen (10) zusammengesetzt einen Ring ergeben.

4. Vorrichtung nach einem der Ansprüche 1 bis 3,
dadurch gekennzeichnet,
dass die Mantelschalen (10) an ihren Enden Bünde (11) aufweisen, die Vorsprünge (12) an den Flanschen (3, 4) hintergreifen.

5. Vorrichtung nach einem der Ansprüche 1 bis 4,
dadurch gekennzeichnet,
dass ein Sicherungsring (13) die Mantelschalen (10) zusammenhält.
